# EUROPEAN PATENT APPLICATION

(11) **EP 4 331 441 A1**
(43) Date of publication of application: **06.03.2024**
(21) Application number: 22194003.4
(22) Date of filing: 05.09.2022
(51) Int. Cl.: A47J 31/36, A47J 31/46

(54) **BEVERAGE OR FOODSTUFF PREPARATION SYSTEM**

(30) Priority: 02.09.2022 GB 202212853; 04.09.2022 GB 202212880
(71) Applicant: Société des Produits Nestlé S.A., 1800 Vevey (CH)
(72) Inventor: LACH, Laurent Joseph Henry, 1020 Renens (CH)
(74) Representative: Navarro Fernández, Maria Isabel

(57) **Abstract**

A machine (4) for preparing a beverage and/or foodstuff from a consumable (6) comprising precursor material (18), the machine including: a processing unit (20) for processing the precursor material, the processing unit including a consumable processing unit (24) and a fluid conditioning system (26), and; electrical circuitry (22) to control the processing unit, the consumable processing unit being movable between a consumable receiving position, in which the consumable is receivable by the consumable processing unit, and a consumable processing position, in which the precursor material of a received consumable is processed, the consumable processing unit including an outlet system (110) having an outlet conduit (112) fluidical connected to and for outlet of beverage and/or foodstuff fluid from a consumable in the consumable processing position, wherein the outlet system includes a valve (114) configured to outlet the fluid via the outlet conduit once a threshold pressure of the fluid of the consumable has been crossed.

## Description

### TECHNICAL FIELD

The present disclosure relates to electrically operated beverage or foodstuff preparation systems, with which a beverage or foodstuff is prepared from a pre-portioned consumable.

### BACKGROUND

Systems for the preparation of a beverage comprise a beverage preparation machine and a consumable. The consumable comprises a single-serving of a beverage forming precursor material, e.g. ground coffee or tea. The beverage preparation machine is arranged to execute a beverage preparation process on the consumable, typically by the exposure of pressurized, heated water to said precursor material. Processing of the consumable in this manner causes the at least partial extraction of the precursor material from the consumable as the beverage.

This configuration of beverage preparation machine has increased popularity due to 1) enhanced user convenience compared to a conventional beverage preparation machines (e.g. compared to a manually operated stove-top espresso maker) and 2) an enhanced beverage preparation process which is optimized to the consumable.

Various types of consumables have been proposed, see for example: DE102014000187A, EP3115316A, EP3225566A, EP3736228A, EP3710380A, EP3900544A, EP3788884A, and EP3984369A. These disclosures provide examples of a deformable consumable in which an outer layer contains the precursor material. The outer layer may be biodegradable. WO2022136284A1 discloses a beverage preparation machine implementation for such consumables, however limited detail is provided for a working machine.

Therefore, in spite of the effort already invested in the development of said systems further improvements are desirable.

### SUMMARY

The present disclosure provides a machine for preparing a beverage and/or foodstuff from a consumable, the consumable comprising precursor material. The machine comprises a processing unit for processing the precursor material and electrical circuitry to control the processing unit to process the consumable. The processing unit includes a consumable processing unit and a fluid conditioning system. In embodiments, the consumable processing unit is movable between a consumable receiving position, in which the consumable is receivable by the consumable processing unit (e.g. it can be transmitted by a user thereto), and a consumable processing position, in which the precursor material of a received consumable is processed.

The electrical circuitry may control processing unit (including at least partial of fully control). For example, some components such as a pump and thermal exchanger may be electrically controlled, whereas others may be manually controlled, e.g. a moving of the consumable processing unit from the consumable receiving position to the consumable processing position (or other position including a consumable washing position) via manual actuation.

In embodiments, the consumable processing unit includes an outlet system having an outlet conduit fluidical connected to and for outlet of beverage and/or foodstuff fluid from a consumable in the consumable processing position (e.g. from fluid from the fluid conditioning system injected into the consumable), wherein the outlet system includes a valve configured to outlet the fluid via the outlet conduit once a threshold pressure of the fluid of the consumable has been crossed.

By implementing a pressure activated valve, the beverage and/or foodstuff fluid from the consumable processing unit may be outlet (e.g. from the machine and to a consumer receptacle) when brewing conditions have reached a desired brewing pressure. It may be desirable to implement a pressure actuated valve on the consumable processing unit instead of on the consumable itself (e.g. via a conventional rupturing diaphragm as found in conventional Nespresso^{®} classic capsules), for reasons of reducing consumable complexity and/or unit cost.

In embodiments, the consumable processing unit comprises a first part arranged as a holder and a second part arranged to close the holder. The holder may act as a cup to locate/contain the consumable in the consumable processing position and an optional consumable washing position. The holder may receive at least 60% or 80 or 90% of the consumable in the consumable processing position. As used herein the term "close the holder" may refer to the second part fully or partially closing an opening of the holder, e.g. such that the consumable can not escape from the holder.

In embodiments, the first part and second part move in a longitudinal direction between the consumable receiving position and the consumable processing position.

In embodiments, the machine comprise an inlet channel that is arranged to transfer the consumable in a depth direction via gravity from an insertion position to a loaded position, in which the consumable is received by the consumable processing unit in the consumable receiving position. A gravitationally fed inlet channel may simplify loading of the consumable processing unit with a consumable.

In embodiments, first part and/or second part comprises one or more of: an injector penetrator comprising an inlet arranged to penetrate the consumable to inject fluid from the fluid conditioning system into the consumable, and; an extractor penetrator comprising an outlet arranged to penetrate the consumable to extract the injected fluid from the fluid conditioning system from the consumable.

By having one or more injector penetrators and/or one or more extractor penetrators on the first part and/or second part, the consumable may be conveniently penetrated when the consumable processing unit is transitioned between said positions. By implementing inlets and outlets on the penetrators, fluid may be conveniently delivered and extracted from below an outer layer of the consumable.

In embodiments, the or each outlet of the extractor penetrator is fluidically connected to the outlet conduit. By coupling the outlet to the outlet of the extractor penetrators, fluid may be conveniently transmitted from inside the consumable to an outlet system, from which it may be outlet for consumption.

In embodiments, the consumable processing unit is configured to process a consumable which is flexible as defined herein.

In embodiments, the consumable is spherical (including substantially spherical) in an undeformed configuration, with an outer layer defining an interior, the interior comprising the precursor material. The interior may be entirely filled with the precursor material, e.g. without voids. The precursor material may be compacted or loose.

In embodiments, the threshold pressure of the valve is adjustable. By implementing the valve to outlet the fluid at variable pressure thresholds, a preparation process may be adapted to different consumables and/or different types of beverage prepared from the consumable, which may be selected by a user via an input unit of the electrical circuitry.

In embodiments, the threshold pressure of the valve is automatically adjustable. An automatically adjustable valve may be more convenient, e.g. an appropriate pressure threshold may be selected by the electrical circuity based on a type of beverage selected by an input unit. In embodiments, the threshold is automatically adjustable in response to an instruction from a user interface of the machine.

In embodiments, the threshold pressure of the valve is manually adjustable (e.g. via a manual actuator). A manually adjustable valve may provide the user with more customisation, e.g. a low pressure enabling the selection of a weaker strength beverage etc. In embodiments, the threshold of the valve is fixed.

In embodiments, the outlet conduit is arranged to outlet fluid from a base of the processing chamber and/or an outlet chamber to which a fluid line of the extractor penetrators are fluidically coupled to. By evacuated the fluid from a base of the said chamber, the majority of the fluid may be outlet. As used herein the term "base" may refer to a lowest point in a depth direction of the chamber in use.

In embodiments, the valve implements an open position in which the fluid is outlet via the outlet conduit and a closed position in which fluid is prevented from being outlet via the outlet conduit. In embodiments, the valve is biased to the closed position by means of a basing member.

In embodiments, the biasing member is a spring and the valve includes a piston, which is axially displaceable along an axis between said positions and the spring is axially aligned about said axis. In embodiments, wherein the spring and piston are arranged in the outlet conduit. Such an valve configuration may be cost effective and convenient to implement in the outlet system.

In embodiments, the consumable processing unit includes one or more of: an injector penetrator comprising an inlet arranged to penetrate the consumable in the consumable processing position to inject fluid from the fluid conditioning system into the consumable, and/or; an extractor penetrator comprising an outlet arranged to penetrate the consumable in the consumable processing position to extract fluid (e.g. beverage and/or foodstuff fluid) from the consumable.

In embodiments, at least one of the injector penetrator or extractor penetrator is arranged to penetrate (in the consumable processing position) an outer layer of the consumable with a inlet or outlet thereof arranged at an interior of the consumable contiguous said outer layer.

By arranging, in a penetrating position, the inlet and/or outlet to be arranged either in contact with or in close proximity to an interior wall of the outer layer of the consumable, the path of the fluid through the precursor material between the inlets and outlets may include as much of the precursor material as possible, e.g. it includes the precursor material proximal the outer layer, such that more efficient extraction may be achieved.

As used herein the term "contiguous" in respect of the inlet and/or outlet and the interior wall of the outer layer may refer to either their touching or in close proximity to, e.g. their most proximal portion being less than 5 mm or 3 mm of 2 mm of 1 mm away from, said interior wall.

In embodiments, the inlet and/or outlet of the injector penetrator or extractor penetrator is arranged to inject or extract said fluid within less than 5 mm or 3 mm of the interior wall of the outer layer.

In embodiments, the inlet and/or outlet of the injector penetrator or extractor penetrator is arranged to inject or extract said fluid in a direction aligned (including substantially aligned) to the outer layer in proximity thereto. By injecting the fluid (or extracting the fluid) with a substantial component projecting across and/or onto an interior wall of the outer layer (as opposed to normal to said outer layer) a path of the fluid through the precursor material may include as much of the precursor material as possible, e.g. it includes the precursor material proximal the outer layer, such that more efficient extraction may be achieved.

In embodiments, the injector penetrator and/or extractor penetrator has a tip with a penetration angle of 20 - 70 degrees. Such an angle range of the tip (about an apex of the tip) may provide convenient penetration of the outer layer.

In embodiments, the inlet or outlet of the injector penetrator or extractor penetrator is arranged distal an apex of the tip, e.g. with an axial distance of the most proximal portion at least 2 mm or 4 mm from the apex of the tip. A maximum axial distance maybe less than 6 mm or 8 mm or 10 mm from the apex of the tip. By arranging the inlet or outlet distal the apex, the inlet or outlet may not be damaged by repetitive penetrations or may be less likely to be blocked. Moreover, in a penetrating position the inlet or outlet may be placed more proximal to the outer layer than compared to an inlet or outlet located at the tip.

In embodiments, an apex of the tip is arranged to penetrate less than 5 mm or 10 mm into the consumable from an outer wall of the outer layer.

In embodiments, the penetrators comprise a hollow conduit fluidically connected to the outlet or inlet. In embodiments, the inlet or outlet is arranged in a sidewall of the penetrators. Hollow delivery members may provide a convenient way to inject and extract fluid from the consumable.

In embodiments, the inlets and/or outlets have a diameter of 1 mm - 5 mm. In embodiments, the injector penetrators and/or the extractor penetrators are arranged to penetrate the consumable when they apply a compressive/penetration force (F) of 50 N - 120 N to the consumable (e.g. a total force applied through all penetrators).

In embodiments, the consumable processing unit is movable to a consumable wash position, in which the received consumable is washed prior to processing. The consumable washing position may be a separated position or the consumable receiving position.

In embodiments, the consumable processing unit includes one or more of: an injector penetrator comprising an inlet arranged to penetrate the consumable in the consumable processing position to inject fluid from the fluid conditioning system into the consumable, and/or; an extractor penetrator comprising an outlet arranged to penetrate the consumable in the consumable processing position to extract fluid (e.g. beverage and/or foodstuff fluid) from the consumable,

In embodiments, the consumable processing unit is configured not to penetrate the consumable in the consumable washing position. By avoiding penetrating an outer layer of the consumable in the consumable washing position, it may be ensured that when the consumable is washed by wash fluid, the precursor material is not degraded and/or removed with the wash fluid.

In embodiments, the consumable processing unit is movable between the consumable wash position in which the consumable has an undeformed configuration (including substantially undeformed) and the consumable processing position in which the consumable processing unit deforms the consumable to a deformed configuration. In embodiments, the wash fluid and consumable are configured so that the consumable is weekend by the wash fluid such that less compressive force (F) (e.g. 10 - 50% less) applied by the consumable processing unit is required to deform the consumable from the undeformed configuration to the deformed configuration compared to an unwashed consumable.

In embodiments, the consumable processing unit comprises a pusher arranged between injector penetrators or extractor penetrators, wherein the consumable and pusher are configured with the pusher to engage the consumable to arrange the consumable in the consumable washing position without penetration of the consumable by the associated injector penetrators or the extractor penetrators. The pusher may enable convenient position of the consumable with reduced likelihood of penetration by the penetrators.

In embodiments, the injector penetrators or the extractor penetrators penetrate the consumable in a longitudinal direction and pusher comprises an extension that extends in a longitudinal direction. By arranging the pusher to extend in a same direction as the penetrator it may be implemented to control a penetration depth of the penetrators.

In embodiments, an outer wall of the consumable and the pusher and the injector penetrators or the extractor penetrators are configured with the pusher and the injector penetrators or the extractor penetrators to abut the outer wall in the consumable washing position. By implementing both the penetrators and the pusher to contact the consumable in said position, a portion of the load may be transmitted through the pusher with reduced likelihood of penetration by the penetrators.

In embodiments, the pusher is configured to abut the outer wall of the consumable in the consumable processing position to limit an amount of penetration of the injector penetrators or the extractor penetrators into the consumable.

In embodiments, the consumable processing unit includes a wash system having a wash inlet arranged to inlet wash fluid onto an outer wall of an outer layer of the consumable in the consumable washing position. By implementing the wash system to project wash fluid on the outer layer, the outer layer may be one or more of cleaned, weakened and dissolved (partially or fully) by the wash fluid.

In embodiments, the wash system includes a wash outlet arranged to remove said fluid from a processing chamber. In embodiments, the wash inlet and/or wash outlet may comprise either or both of the inlet and outlet of the injector penetrator and/or the extractor penetrator.

In embodiments, the wash inlet directs wash fluid onto (including directly onto) one or more of the: consumable; injector penetrator, and; extractor penetrator. In embodiments, the wash fluid is transmitted over at least 60% or 70% or 80% of the outer wall of the outer layer of the consumable.

In embodiments, the wash inlet is arranged above the consumable in the consumable washing position such that the wash fluid is directed over the consumable via gravity. By implementing the wash fluid to be delivered over the consumable at least partially by gravity, more efficient distribution of the wash fluid over the consumable may be achieved.

In embodiments, the wash system is configured to supply either less fluid than to submerge the consumable in the processing chamber. It may be desirable to restrict an amount of wash fluid used by the machine since the machine may have to carry the spent wash fluid in a separate reservoir and may also have a limited reservoir of said fluid.

In embodiments, the wash system is configured to supply sufficient fluid to submerge the consumable in the processing chamber. Such an implementation may provide an effective distribution of the wash fluid.

In embodiments, the electric circuitry is configured to control the consumable processing unit to implement the consumable washing position and a wash system to wash the consumable prior to processing the consumable in the consumable processing position.

In embodiments, the wash fluid may dissolve at least part of the outer layer, with the wash outlet including the dissolved outer layer.

In embodiments, electric circuitry is configured to control the wash system to wash one or more of: the injector penetrator; the extractor penetrator, and; the processing chamber, subsequent to ejection of the container, e.g. in a further wash process. Such an arrangement may be effecting in removing traces of a spent consumable from contamination of a subsequent preparation process.

In embodiments, the consumable processing unit is movable between a consumable processing position, in which the precursor material of a received consumable is processed, and a consumable washing position, in which the received consumable is washed prior to processing.

In embodiments, the processing unit comprising a wash system with a wash inlet arranged to direct wash fluid onto (including directly on to or via guide member) an outer wall of an outer layer of the consumable.

By directing the wash fluid onto a consumable, a greater washing effect may be achieved based on a momentum of the impinging, incident fluid, rather than for example cleaning by submersion (e.g. filling of the processing chamber in which the consumable is arranged without direct transmission of the wash fluid from the inlet to the consumable before it hits the fill level), moreover less fluid may be required than with submersion.

As used herein the term "direct wash fluid on to an outer wall" may refer to the directing of a jet or droplets or other flow along a projection path than intersects the outer wall, such that the wash fluid is projected into the outer wall and runs over the outer wall. It may be distinguished from submersion since a flow is not projected onto the outer wall.

In embodiments, the wash system is configured to generate wash fluid at a pressure of 3 - 6 bar or 2 - 10 bar or 1 to 15 bar at the wash inlet. Such a pressure range may provide improved washing.

In embodiments, the wash inlet is arranged to project the wash fluid onto a guide member, which is arranged to guide and expand the fluid onto one or more of: the consumable; an injector penetrator, and; an extractor penetrator. By implementing a guide member a jet of wash fluid from the inlet may have a greater dispersion, and therefore wash effect, over the outer layer

In embodiments, the wash inlet or wash outelt includes the inlet of the injector penetrator and/or the outlet of the extractor penetrator.

In embodiments, the wash system is configured to wash the consumable processing unit after processing the consumable, e.g. after its ejection from the consumable processing unit. Said washing may include directing wash fluid onto the injector penetrator, and/or the extractor penetrator. Said washing may include directing wash fluid in to the processing chamber.

In embodiments, the wash system is configured to reverse a direction of wash fluid to the wash inlet such that the wash inlet is implemented as a wash outlet to outlet wash fluid from a processing chamber in which the consumable is arranged. By reversing a flow, a more convenient wash system may be implemented since separate conduits for at least part of the wash system may be obviated.

In embodiments, the wash system is configured to circulate the wash fluid around the consumable from the wash inlet to a wash outlet. By circulating the wash fluid around the consumable a greater area of the outer layer may be washed, e.g. the wash flow travels from the wash inlet, around the consumable to the wash outlet.

In embodiments, the consumable processing unit comprises a first part and second part which are movable between the consumable receiving position and the consumable processing position, the consumable processing unit includes one or more of: an injector penetrator comprising an inlet arranged to penetrate the consumable in the consumable processing position to inject fluid from the fluid conditioning system into the consumable, and; an extractor penetrator comprising an outlet arranged to penetrate the consumable in the consumable processing position to extract fluid from the consumable.

In embodiments, the injector penetrator and/or extractor penetrator is slideably movable through one or more apertures in the first part and/or second part to penetrate the consumable. By implementing the injector penetrators and/or extractor penetrators to slide through apertures in the parts of the consumable processing unit, they may be conveniently inserted and retracted from the consumable whilst the part with the apertures may remain stationary relative the consumable to support the consumable.

In embodiments, the consumable processing unit is configured with: the extractor penetrator and/or the injector penetrator slidable between a retracted position, in which they are prevented from penetrating and/or from abutment with a received consumable, and an extended position in which they penetrate the consumable. In embodiments, in the retracted position the extractor penetrator and/or the injector penetrator do not penetrate the consumable.

In embodiments, the consumable processing unit is configured with a consumable washing position in which the extractor penetrator and/or the injector penetrator are arranged in the retracted position. In embodiments, the consumable processing unit is configured with the consumable receiving position in which the extractor penetrator and/or the injector penetrator arranged in the retracted position.

In embodiments, the second part includes said apertures through which the extractor penetrator is slideably movable and the first part includes the injector penetrator, which is fixed to the first part, to slide with the first part relative the second part. With such an arrangement the injector penetrators move with the first part as the first part is moved between the consumable receiving/wash positions and the consumable processing positions, whereas the extractor penetrators are independently actuatable of the second part.

In embodiments, the consumable processing unit is configured when moving to the consumable processing position with the extractor penetrators to slide relative the second part in an longitudinal direction and first part to slide relative the second part in an opposed longitudinal direction.

In embodiments, the second part is arranged to abut the consumable in the consumable processing position and to apply a compressive force (F) to deform the consumable to a deformed configuration.

In embodiments, the second part is shaped to correspond to said deformed shape. By arranging the second part to have substantially the same shape as the consumable in the deformed configuration, the consumable may be encouraged into said deformed configuration.

In embodiments, the consumable processing unit is configured to implement an ejection position in which: the extractor penetrator and/or the injector penetrator are retracted (e.g. within the apertures) so as not to penetrate the consumable. The apertures in the parts are therefore are implementing to push consumable off penetrators.

In embodiments, one of the extractor penetrators or the injector penetrators are configured with a greater total pull-out force than that of the other of the extractor penetrators or the injector penetrators, such that as the consumable processing unit is moved (e.g. by movement of the first part and second part apart from each other) from the consumable processing position to the ejection position, the other of the extractor penetrators or the injector penetrators are retracted from the consumable, whilst the one of the extractor penetrators or the injector penetrators remain penetrating the consumable.

In embodiments, the consumable processing unit is configured to eject the consumable by retracting the remaining one of the extractor penetrators or the injector penetrators from penetrating the consumable to the retracted position.

In embodiments, the consumable processing unit is movable between a consumable receiving position, in which the consumable is receivable by the consumable processing unit, and a consumable processing position, in which the precursor material of a received consumable is processed.

In embodiments, the second part is movable relative the extractor penetrators and machine, with the consumable processing unit configured to move the first part to displace consumable into the second part to expose the extractor penetrators.

In embodiments, the consumable processing unit is configured to apply a compressive force (F) to deform the consumable from an undeformed configuration in the consumable receiving position to a deformed configuration in the consumable processing position.

In embodiments, in the deformed configuration the consumable is deformed to radially expand the consumable (e.g. relative to the undeformed configuration) to fluidically seal an outer wall of the consumable between an inlet side of the consumable and an opposed outlet side of the consumable so that fluid can only travel through the consumable from the inlet side to the outlet side of the consumable (e.g. and not around an outer wall of the outer layer from the inlet side to the outlet side due to the blockage of the seal). The outer wall may be sealed against a processing chamber, which can include one or more of the: first part; the second part, and an interior of the machine.

By implementing the consumable processing unit to deform the consumable to create a seal to block a fluid transmission path outside of the consumable, increased transmission of the fluid under pressure ( e.g. at 2 - 20 bar) through the precursor material in the consumable and therefore extraction may be achieved.

As used herein the term "inlet side" may refer to (e.g. in the deformed configuration) a portion of the consumable that is penetrated by the injector penetrators, which may be distal from the sealed part of the outer wall. As used herein the term "outlet side" may refer to (e.g. in the deformed configuration) a portion of the consumable that is penetrated by the extractor penetrators, which may be distal from the sealed part of the outer wall.

In embodiments, the consumable processing unit comprises a first part and a second part which are movable in the longitudinal direction to apply said compressive force (F) to the consumable.

In embodiments, the processing chamber defined by the first part, the second part and optionally a housing that houses the first part and second part.

In embodiments, in the deformed configuration (compared to the undeformed configuration) the consumable has increased tension in the outer layer at points where it is penetrated by the extractor penetrator and/or the injector penetrator. By increasing the tension in the outer layer at the penetration points, the penetration maybe more convenient and precise.

In embodiments, the first part and second part are pressed onto the inlet side and the outlet side of the consumable to seal against the outer layer of the consumable such that fluid injected into the consumable travels from the inlet side to the outlet side only through the consumable. By pressing the consumable onto the first part and/or second part proximal the associated penetrators, a seal may be created around the penetrators.

In embodiments, one or more injector penetrators and/or extractor penetrators are arranged distal an outer sealing edge of the first part and/or second part.

In embodiments, in the deformed configuration the consumable is deformed to increase a surface area of the consumable. By increasing a surface area of the consumable, the penetrators may be arranged to inject and extract fluid over a greater volume of the precursor material.

In embodiments, the consumable processing unit is configured with the consumable in the deformed configuration with the consumable radially expanded about the longitudinal axis to fluidically seal the outer wall against the first part. By expanding the consumable, when transitioning to the consumable processing position, to seal against the first part, e.g. a side wall portion thereof, a convenient seal may be obtained.

In embodiments, the consumable processing unit is configured with the consumable in the deformed configuration with the consumable radially expanded about the longitudinal axis to fluidically seal the outer wall between the first part and the second part. By expanding the consumable, when transitioning to the consumable processing position, to seal to close a gap between the first part and the second part, a convenient seal may be obtained between two movable parts, moreover such that less force may be required to maintain the parts in position. Moreover, the gap may be provided for an inlet of a wash system, which is conveniently closed by said seal.

In embodiments, the first part comprises a side wall portion and a base portion, which is independently movable of the side wall portion to implement the consumable processing position. By implementing a base position that can include the injector penetrators, to move relative the side wall portion, a seal between the constable and side wall portion can be increased without moving the side wall portion. Moreover, the side wall portion may be moved to close the inlet channel and remain in said position whilst the base portion is moved to implement the consumable processing position or other position.

The present disclosure provides a system comprising the machine of any preceding embodiment or another embodiment disclosed herein and a consumable configured for use with said machine.

The present disclosure provides a consumable processing unit or a processing unit of any preceding embodiment or another embodiment disclosed herein, said unit may be for implementation as part of a machine for preparing a beverage and/or foodstuff from a consumable as defined herein.

The present disclosure provides use of a consumable as disclosed herein for the machine of any of preceding embodiment or another embodiment disclosed herein.

The present disclosure provides a method of preparing a beverage and/or foodstuff.

In embodiments, the method comprises: processing a precursor material of a consumable with a consumable processing unit to form a beverage and/or foodstuff fluid in the consumable; increasing a pressure of said fluid in said consumable to a threshold, and; activating an outlet valve at said threshold to outlet the fluid.

In embodiments, the method comprises: arranging a consumable containing precursor material in a consumable processing unit in a consumable processing position; penetrating the consumable with either or both of: an injector penetrator comprising an inlet to inject fluid into the consumable, and; an extractor penetrator comprising an outlet to extract fluid from the consumable; arranging said inlet and/or outlet at an interior of the consumable and contiguous an outer layer of the consumable, and; injecting fluid into the consumable in contact with the precursor material and extracting the injected fluid from the consumable.

In embodiments, the method comprises: arranging a consumable containing precursor material in a consumable processing unit in a consumable washing position without penetration of the consumable and applying fluid (e.g. cleaning fluid) to wash the consumable; arranging the consumable in a consumable processing position and penetrating the consumable with either or both of: an injector penetrator comprising an inlet to inject fluid into the consumable, and; an extractor penetrator comprising an outlet to extract fluid from the consumable, and; injecting (e.g. in a separate operation to the wash) fluid into the consumable in contact with the precursor material and extracting the injected fluid from the consumable.

In embodiments, the method comprises: arranging a consumable containing precursor material in a consumable processing unit in a consumable washing position; directing wash fluid onto an outer wall of an outer layer of the consumable; arranging the consumable in a consumable processing position (e.g. subsequent to arranging the consumable in the consumable wash position), and; injecting (e.g. in a separate operation to the wash) fluid into the consumable in contact with the precursor material and extracting the injected fluid from the consumable.

In embodiments, the method comprises: arranging a consumable containing precursor material in a consumable processing unit; sliding an extractor penetrator and/or an injector penetrator through an aperture in a first part and/or a second part of the consumable processing unit to penetrate the consumable, and; injecting fluid into the consumable in contact with the precursor material and extracting the injected fluid from the consumable.

In embodiments, the method comprises: arranging a consumable containing precursor material in a consumable processing unit; deforming the consumable to seal an outer wall between an inlet side and an outlet side of the consumable; injecting fluid on the inlet side of the consumable such that it can only travel through the consumable to the outlet side of the consumable, and; extracting the injected fluid from the consumable.

The method may be implemented by the machine of any of preceding embodiment or another embodiment disclosed herein.

The present disclosure provides electrical circuitry to implement the method of the preceding embodiment or another embodiment disclosed herein. The electrical circuitry may be implemented to control a processing unit to implement said method.

The present disclosure provides a computer readable medium comprising program code to implement the method of the preceding embodiment or another embodiment disclosed herein.

The preceding summary is provided for purposes of summarizing some embodiments to provide a basic understanding of aspects of the subject matter described herein. Accordingly, the above-described features are merely examples and should not be construed to narrow the scope or spirit of the subject matter described herein in any way. Moreover, the above and/or proceeding embodiments may be combined in any suitable combination to provide further embodiments. Other features, aspects, and advantages of the subject matter described herein will become apparent from the following Detailed Description of Embodiments, Brief Description of Figures, and Claims.

### BRIEF DESCRIPTION OF FIGURES

Aspects, features and advantages of embodiments of the present disclosure will become apparent from the following detailed description of embodiments in reference to the appended drawings in which like numerals denote like elements.
Figure 1 is a block system diagram showing an embodiment system for preparation of a beverage or foodstuff or a precursor thereof.
Figure 2 is a block system diagram showing an embodiment consumable of the system of figure 1.
Figure 3 is a block system diagram showing an embodiment machine of the system of figure 1.
Figure 4 is an illustrative diagram showing an embodiment fluid conditioning system of the machine of figure 3.
Figure 5 is a block diagram showing embodiment electrical circuitry of the machine of figure 3.
Figures 6 to 9 are illustrative diagrams showing embodiment processing systems of the machine of figure 3.
Figure 10 is an illustrative diagram showing an embodiment injector penetrator or extractor penetrator of the processing system of figures 6 to 9.
Figure 11 is an illustrative diagram showing the injector penetrator or extractor penetrator of figure 10 penetrating a consumable of the system of figure 1.

### DETAILED DESCRIPTION OF EMBODIMENTS

Before describing several embodiments of the system, it is to be understood that the system is not limited to the details of construction or process steps set forth in the following description. It will be apparent to those skilled in the art having the benefit of the present disclosure that the system is capable of other embodiments and of being practiced or being carried out in various ways.

The present disclosure may be better understood in view of the following explanations:
As used herein, the term **"machine"** may referto an electrically operated device that: can prepare, from a precursor material, a beverage and/or foodstuff. The machine may implement said preparation by one or more of the following processes: dilution; heating; cooling; mixing; whisking; dissolution; soaking; steeping; extraction; conditioning; infusion; grinding, and; other like process. The machine may be dimensioned for use on a work top, e.g. it may be less than 70 cm in length, width and height. As used herein, the term **"prepare"** in respect of a beverage and/or foodstuff may refer to the preparation of at least part of the beverage and/or foodstuff (e.g. a beverage is prepared by said machine in its entirety or part prepared to which the end-user may manually add extra fluid prior to consumption, including milk and/or water). The machine may be configured to operate from a mains AC electrical supply, e.g. 110 - 240v at 40 - 70 hz.

As used herein, the term **"consumable"** may refer to any configuration to contain the precursor material, e.g. as a single-serving, pre-portioned amount. The consumable may have a maximum capacity such that it can only contain a single-serving of precursor material. The consumable may be single use, e.g. it is physically altered after a preparation process, which can include one or more of: perforation to supply fluid to the precursor material, and; perforation to supply the beverage/foodstuff from the consumable. The consumable have an internal volume of 20 - 200 ml. The consumable may be configured as defined in and one of: Various types of consumables have been proposed, see for example: DE102014000187A, EP3115316A, EP3225566A, EP3736228A, EP3710380A, EP3900544A, EP3788884A, EP3984369A, and WO2022136284A1

As used herein, the term **"external device"** or **"external electronic device"** or **"peripheral** device" may include electronic components external to the machine, e.g. those arranged at a same location as the machine or those remote from the machine, which communicate with the machine over a computer network. The external device may comprise a communication interface for communication with the machine and/or a server system. The external device may comprise devices including: a smartphone; a PDA; a video game controller; a tablet; a laptop; or other like device.

As used herein, the term **"server system"** may refer to electronic components external to the machine, e.g. those arranged at a remote location from the machine, which communicate with the machine over a computer network. The server system may comprise a communication interface for communication with the machine and/or the external device. The server system can include: a networked-based computer (e.g. a remote server); a cloud-based computer; any other server system.

As used herein, the term **"system"** or **"beverage or foodstuff preparation system"** may refer to the combination of any two of more of: the beverage or foodstuff preparation machine; the consumable; the server system, and; the peripheral device.

As used herein, the term **"beverage"** may refer to any substance capable of being processed to a potable substance, which may be chilled or hot. The beverage may be one or more of: a solid; a liquid; a gel; a paste. The beverage may include one or a combination of: tea; coffee; hot chocolate; milk; cordial; vitamin composition; herbal tea/infusion; infused/flavoured water, and; other substance. As used herein, the term **"foodstuff'** may refer to any substance capable of being processed to a nutriment for eating, which may be chilled or hot. The foodstuff may be one or more of: a solid; a liquid; a gel; a paste. The foodstuff may include: yoghurt; mousse; parfait; soup; ice cream; sorbet; custard; smoothies; other substance. It will be appreciated that there is a degree of overlap between the definitions of a beverage and foodstuff, e.g. a beverage can also be a foodstuff and thus a machine that is said to prepare a beverage or foodstuff does not preclude the preparation of both.

As used herein, the term **"precursor material"** may refer to any material capable of being processed to form part or all of the beverage or foodstuff. The precursor material can be one or more of a: powder; crystalline; liquid; gel; solid, and; other. Examples of a beverage forming precursor material include: ground coffee; milk powder; tea leaves; coco powder; vitamin composition; herbs, e.g. for forming a herbal/infusion tea; a flavouring, and; other like material. Examples of a foodstuff forming precursor material include: dried vegetables or stock as anhydrous soup powder; powdered milk; flour based powders including custard; powdered yoghurt or ice-cream, and; other like material. A precursor material may also refer to any pre-precursor material capable of being processed to a precursor material as defined above, i.e. any precursor material that can subsequently be processed to a beverage and/or foodstuff.

As used herein, the term **"fluid"** (in respect of fluid supplied by a fluid conditioning system) may include one or more of: water; milk; other. As used herein, the term **"conditioning"** in respect of a fluid may refer to change a physical property thereof and can include one or more of the following: heating or cooling; agitation (including frothing via whipping to introduce bubbles and mixing to introduce turbulence); portioning to a single-serving amount suitable for use with a single serving consumable; pressurisation e.g. to a brewing pressure; carbonating; fliting/purifying, and; other conditioning process.

As used herein, the term **"processing unit"** may refer to an arrangement that can process precursor material to a beverage or foodstuff. The processing unit may have any suitable implementation for processing the consumable. The processing unit may comprise a consumable processing unit and a fluid conditioning system.

As used herein, the term **"consumable processing unit"** may refer to an arrangement that can process a consumable to derive an associated beverage or foodstuff from a precursor material. The consumable processing unit may be arranged to process the precursor material by one of more of the following: dilution; heating; cooling; mixing; dissolution; soaking; steeping; extraction; conditioning; pressurisation; infusion, and: other processing step. The consumable processing unit may therefore implement a range of units depending on the processing step.

As used herein, the term **"preparation process"** may refer to a process to prepare a beverage or foodstuff from a precursor material or to prepare a pre-precursor material from precursor material. A preparation process may refer to the processes electrical circuitry executes to control the consumable processing unit to process said precursor or pre-precursor material.

As used herein, the term **"electrical circuitry"** or **"circuitry"** or **"control electrical circuitry"** may refer to one or more hardware and/or software components, examples of which may include: an Application Specific Integrated Circuit (ASIC); electronic/electrical componentry (which may include combinations of transistors, resistors, capacitors, inductors etc); one or more processors; a non-transitory memory (e.g. implemented by one or more memory devices), that may store one or more software or firmware programs; a combinational logic circuit; interconnection of the aforesaid. The electrical circuitry may be located entirely at the machine, or distributed between one or more of: the machine; external devices; a server system.

As used herein, the term **"processor"** or **"processing resource"** may refer to one or more units for processing, examples of which include an ASIC, microcontroller, FPGA, microprocessor, digital signal processor (DSP), state machine or other suitable component. A processor may be configured to execute a computer program, e.g. which may take the form of machine readable instructions, which may be stored on a non-transitory memory and/or programmable logic. The processor may have various arrangements corresponding to those discussed for the circuitry, e.g. on-board machine or distributed as part of the system. As used herein, any machine executable instructions, or computer readable media, may be configured to cause a disclosed method to be carried out, e.g. by the machine or system as disclosed herein, and may therefore be used synonymously with the term method, or each other.

As used herein, the term **"computer readable medium/media"** or **"data storage"** may include any medium capable of storing a computer program, and may take the form of any conventional non-transitory memory, for example one or more of: random access memory (RAM); a CD; a hard drive; a solid state drive; a memory card; a DVD. The memory may have various arrangements corresponding to those discussed for the circuitry.

As used herein, the term **"communication resources"** or **"communication interface"** may refer to hardware and/or firmware for electronic information transfer. The communication resources/interface may be configured for wired communication ("wired communication resources/interface") or wireless communication ("wireless communication resources/interface"). Wireless communication resources may include hardware to transmit and receive signals by radio and may include various protocol implementations e.g. the 802.11 standard described in the Institute of Electronics Engineers (IEEE) and Bluetooth^{™} from the Bluetooth Special Interest Group of Kirkland Wash. Wired communication resources may include; Universal Serial Bus (USB); High-Definition Multimedia Interface (HDMI) or other protocol implementations. The machine may include communication resources for wired or wireless communication with an external device and/or server system.

As used herein, the term **"network"** or **"computer network"** may refer to a system for electronic information transfer between a plurality of apparatuses/devices. The network may, for example, include one or more networks of any type, which may include: a Public Land Mobile Network (PLMN); a telephone network (e.g. a Public Switched Telephone Network (PSTN) and/or a wireless network); a local area network (LAN); a metropolitan area network (MAN); a wide area network (WAN); an Internet Protocol Multimedia Subsystem (IMS) network; a private network; the Internet; an intranet.

### [General system description]

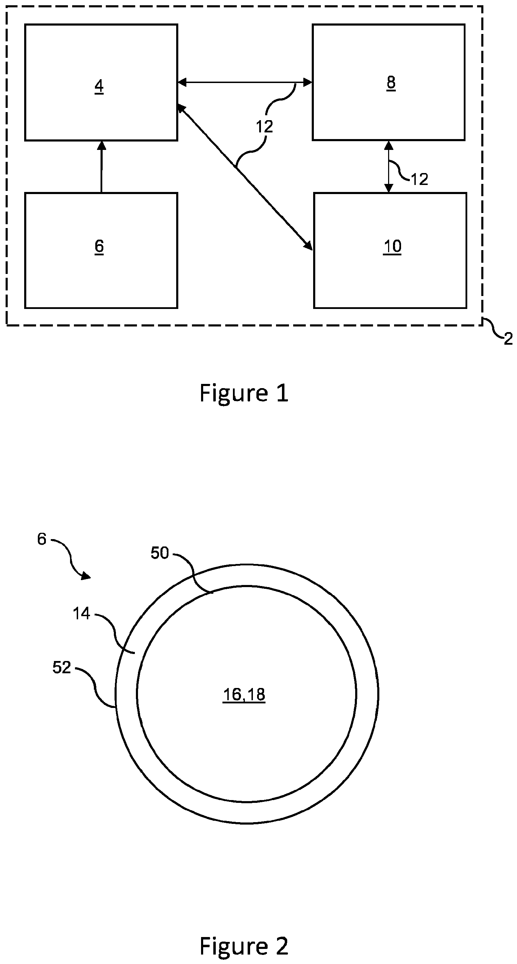

Referring to figure 1, the system **2** comprises a machine **4,** a consumable **6,** server system **8** and a peripheral device **10.** The server system **8** is in communication with the machine **4** via a computer network **12.** The peripheral device **10** is in communication with the machine **4** via the computer network **12.**

In variant embodiments, which are not illustrated: the peripheral device and/or server system is omitted.

Although the computer network **12** is illustrated as the same between the machine **4,** server system **8** and peripheral device **10,** other configurations are possible, including: a different computer network for intercommunication between each device: the server system communicates with the machine via the peripheral device rather than directly. In a particular example: the peripheral device communicates with the machine via a wireless interface, e.g. with a Bluetooth^{™} protocol, and; the server system communicates with the machine via a via a wireless interface, e.g. with a IEE 802.11 standard, and also via the internet.

### [Consumable]

Referring to figure 2, a consumable 6 that is for use with a processing unit (as will be discussed) of the machine **2** comprises an outer layer **14** defining an interior **16.** The precursor material **18** is contained in the interior **16.** In the example the precursor material is ground coffee.

The consumable **6** maybe implemented as discussed in any off DE102014000187A, EP3115316A, EP3225566A, EP3736228A, EP3710380A, EP3900544A, EP3788884A, EP3984369A, and WO2022136284A1, and for brevity is not discussed in detail.

The consumable is spherical, although other shapes are contemplated, e.g. square. The outer layer may have a thickness when dry of any of: 0.01 mm to 3.5 mm; 0.02 mm to 1.5 mm, and; 0.05 mm and 0.2 mm. A diameter of the consumable may be 2 cm - 5 cm.

The outer layer may be formed of one or more of: P; PP; natural rubber; silicone; polysaccharides or their derivatives; compounds of vegetable starch and fatty acids; polyvinyl alcohol; polyvinyl alcohol copolymer; fleece; proteins; aluminium, and; biodegradable plastics. The outer layer may be dissolvable, e.g. in the wash fluid (which may be heated and/or pressurised water as will be discussed) or not dissolvable.

The consumable may be flexible. As used herein the term "flexible" may refer to the test provided in figures 1a and 1b and in the associated description of WO2022136284A1. Referring to figures 1a and 1b of WO2022136284A1, in a particular example, a "flexible" generally spherical consumable may expand from an undeformed configuration to a deformed configuration when subject to a compressive force F between two opposed parallel plates.

In the deformed configuration, compared to the undeformed configuration, in a direction transverse to the applied compressive force F the consumable expands by 20% to 30% compared to its original dimension. The outer dimension d1 in the transverse direction in the deformed configuration is 30% to 20% larger than the original outer dimension d0 in the transvers direction in the undeformed configuration. The force F required for the 20% to 30% expansion may be 50N - 120N. Said deformation condition may be applied to the consumable in the consumable processing position, as will be discussed.

### [Machine]

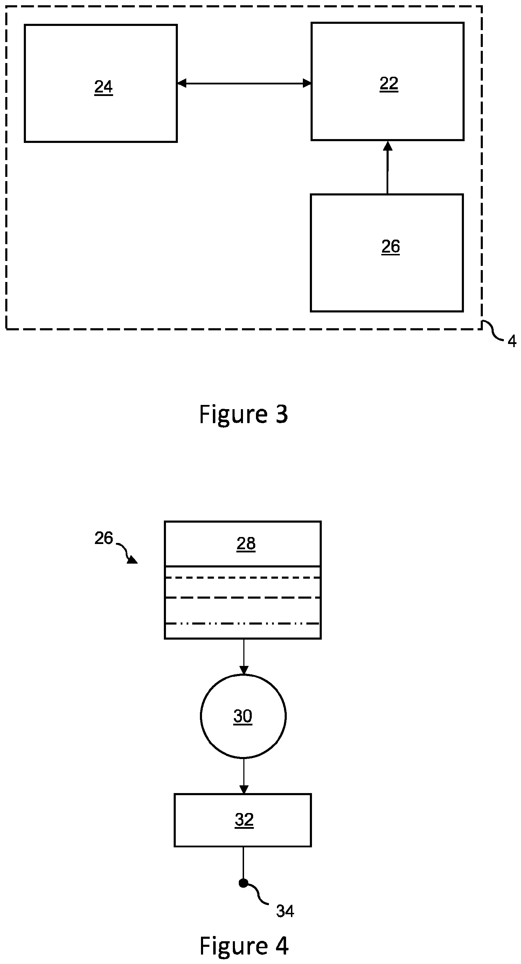

Referring to figure 3, the machine **4** comprises: a processing unit **20** for processing the precursor material, and; electrical circuitry **22.**

The electrical circuitry **22** controls the processing unit **20** to execute a preparation process, in which the precursor material of the consumable **6** is process to a beverage or foodstuff or a precursor thereof.

### [Processing unit]

Referring to figures 3 and 4, the processing unit **14** comprises a consumable processing unit **24** and a fluid conditioning system **26.**

The consumable processing unit **24** is arranged to process the consumable **6** to derive a beverage or foodstuff from the precursor material 18. The fluid conditioning system **26** conditions fluid supplied to the consumable processing unit **24.** The electrical circuitry **22** controls the consumable processing unit **24** and the fluid conditioning system **26** to execute the preparation process.

### [Fluid conditioning system]

Referring to figure 4, the fluid conditioning system **26** includes a reservoir **28;** pump **30;** heat exchanger **32** and; an outlet **34** for the conditioned fluid. The reservoir **28** contains fluid, typically sufficient for multiple preparation processes. The pump **30** displaces fluid from the reservoir **28,** through the heat exchanger **32** and to the outlet **34** (which is connected to the consumable processing unit **24**). The pump **30** can be implement as any suitable device to drive fluid, including: a reciprocating; a rotary pump; other suitable arrangement. The heat exchanger **32** is implemented to heat the fluid, and can include: an in-line, thermo block type heater; a heating element to heat the fluid directly in the reservoir; other suitable arrangement.

In variant embodiments, which are not illustrated: the pump is omitted, e.g. the fluid is fed by gravity to the consumable processing unit or is pressurised by a mains water supply; the reservoir is omitted, e.g. water is supplied by a mains water supply; the heat exchanger is arranged to cool the fluid, e.g. it may include a refrigeration-type cycle heat pump); the heat exchanger is omitted, e.g. a mains water supply supplies the water at the desired temperature; the fluid conditioning system includes a filtering/purification system, e.g. a UV light system, a degree of which that is applied to the fluid is controllable; a carbonation system that controls a degree to which the fluid is carbonated.

### [Control electrical circuitry]

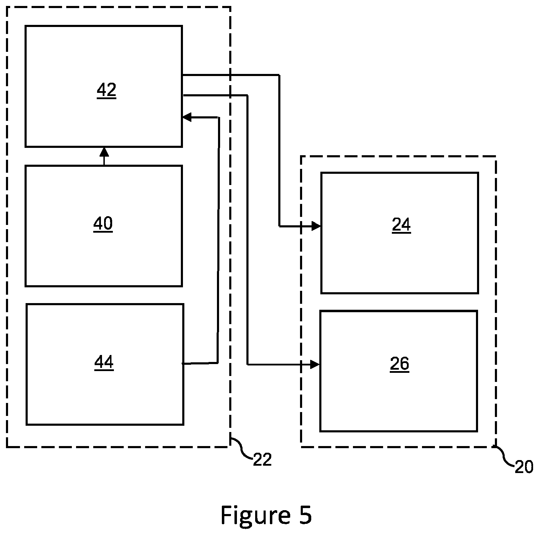

Referring to figure 5, the electrical circuitry **22** at least partially implements (e.g. in combination with hardware) an: input unit **40** to receive an input from a user confirming that the machine **4** is to execute a preparation process; a processor **42** to receive the input from the input unit **40** and to provide a control output to the processing unit **20,** and; a feedback system **44** to provide feedback from the processing unit **20** during the preparation process, which may be used to control the preparation process.

The input unit **40** is implemented as a user interface, which can include one or more of: buttons, e.g. a joystick button or press button; joystick; LEDs; graphic or character LDCs; graphical screen with touch sensing and/or screen edge buttons; other like device; a sensor to determine whether a consumable has been supplied to the machine by a user.

The feedback system **44** can implement one or more of the following or other feedback control based operations:
a flow sensor to determine a flow rate/volume of the fluid to the outlet **34** (shown in figure 3) of the fluid conditioning system **26,** which may be used to meter the correct amount of fluid to the consumable **6** and thus regulate the power to the pump **30;**
a temperature sensor to determine a temperature of the fluid to the outlet **34** of the fluid conditioning system **26,** which may be used to ensure the temperature of fluid to the consumable **6** is correct and thus regulate the power to the heat exchanger **32**);
a level sensor to determine a level of fluid in the reservoir **28** as being sufficient for a preparation process;
a position sensor to determine a position of the consumable processing unit **24** (e.g. a consumable extraction position or a consumable receiving position).

### [Consumable Processing Unit]

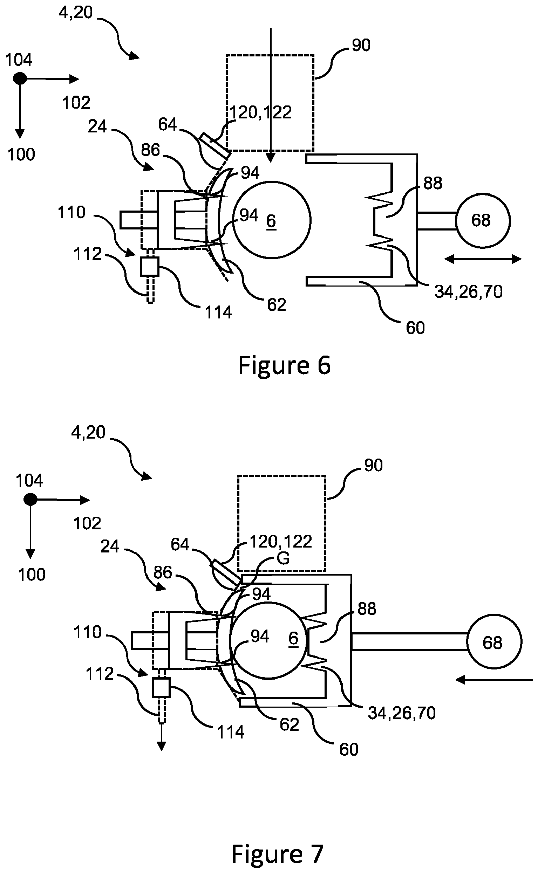

Referring to figures 6 - 9, and example of the consumable processing unit **24** is provided, which will be discussed in detail in the following section.

### [General arrangement]

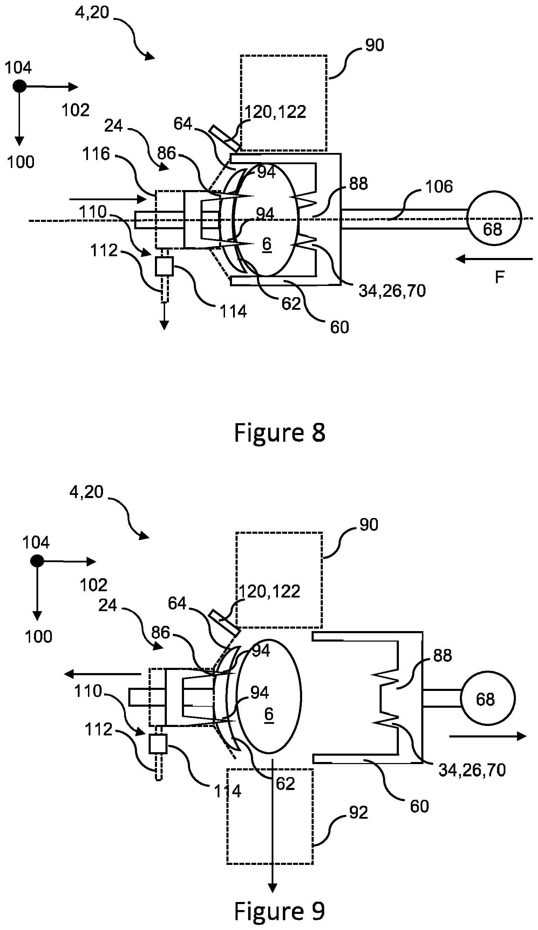

Referring to figures 6 and 8, the consumable processing unit **24** comprises a first part **60** arranged as a holder and a second part **62** arranged to close holder (e.g. to fully or partially close the holder, as will be discussed). The holder acts as a cup to locate the consumable **6** in a consumable processing position and a consumable washing position (as will be discussed). The first part **60** and second part **62** define a processing chamber **64** in which the consumable **6** is processed.

The first part **60** and second part **62** are movable relative to each other between a consumable receiving position (figure 6) in which the consumable **6** is receivable by the consumable processing unit **24,** and a consumable processing position (figure 8), in which the precursor material **18** of the received consumable **6** is processed. A consumable wash position (figure 8) an consumable ejection position (figure 9) are also implemented, which will be discussed.

The first part **60** and second part **62** move in a longitudinal direction **102** between the various positions, along a central axis **108,** which is longitudinally aligned. In the various positions a central axis (not illustrated) of the consumable **6** is colinear the central axis **106.**

The processing unit **20** includes an inlet channel **90** that is arranged to transfer a consumable **6,** which is supplied by a user (not illustrated), from an insertion position (not illustrated) in a depth direction **100** via gravity to the consumable processing unit **24** in the consumable receiving position (shown in figure 6).

Referring to figure 9, the processing unit **20** includes an outlet channel **92** that is arranged to transfer a spent consumable **6** (which has previously been processed in the consumable processing position shown in figure 8) in the consumable ejection position in a depth direction **100** via gravity out of the consumable processing unit **24.**

The first part **60** is moved relative the second part **62** by an actuator **68,** which is implemented as a motor with an encoder for position determination.

In variant embodiments, other implementations of the consumable processing unit are to be contemplated, including: the first part and second part are alternatively orientated, including to move in the depth direction; the channel is omitted and a user manually loads the consumable in the consumable receiving position; other formations rather than a first and second part are implemented, including an integrated arrangement which deforms between said positions; both the first part and second part are formed has a holder; the first part and second part may be moved relative each other via alternative actuators, e.g. a hydraulic system that is powered by the pump or a solenoid or they may be manually actuated; in embodiments wherein the first part is partially closed by the second part, a portion of an interior the machine may define the remainder of the processing chamber, e.g. the consumable may be deformed against the first part, the second part and the interior of the machine.

### [Injector and Extractor Penetrators]

Referring to figure 8, the first part **60** includes injector penetrators **70,** which are arranged to penetrate and inject fluid from the outlet **34** of the fluid conditioning system **26** into the consumable **6.** In the example, there are a number of injector penetrators **70** e.g. 4 - 6. The injector penetrators **70** extend with a major axis **108** in the counter longitudinal direction **102,** and are disposed circumferentially about a circle with a centre at the axis **106.**

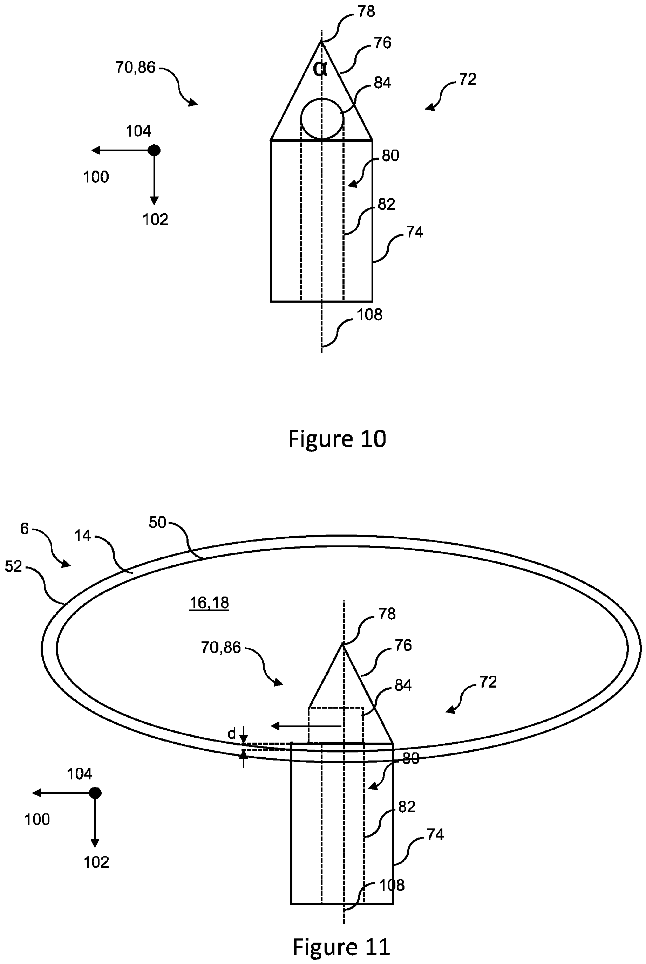

Referring to figure 10, the injector penetrators **70** are circular sectioned and include a body **72** comprising a shaft **74** and tip **76.** The tip **76** includes an apex **78** for penetration of the consumable **6.** An angle **α** of the tip **76** at the apex **78** is 20 - 70 degrees. The injector penetrators **70** include a fluid line **80** comprising a conduit **82** through the shaft **74** and tip **76,** which is fluidically connected to an inlet **84.**

Referring to figure 11, the injector penetrator **70** is shown in a penetrating position penetrating a consumable **6** (as is the case in the consumable processing position shown in figure 8). In the penetrating position, the apex **78** of the tip **76** penetrates the outer layer **14** of the consumable **6.** The inlet **84** is arranged entirely in the interior of **16** of the consumable **6.** In particular, the most longitudinal position of the inlet **84** has a longitudinal distance **d** of less than or equal to that of the proximal inner wall **50.** In this way fluid from the inlet **84** is injected directly into the precursor material adjoining the inner wall **50.** The distance **d** may be 0 - 5 mm or 0 - 3 mm or 0 - 2 mm or 0 - 1 mm.

The inlet **84** is arranged to inject fluid into the consumable **6** generally in the depth direction **100,** which is generally aligned to the portion of the outer layer **14** immediately proximal the inlet **84.** In this way the injected fluid may be projected along the interior surface **50** of the outer layer **14** for improved dispersion.

The inlet **84** is arranged on the tip **76,** but is distal the apex **78.** The inlet **84** is not arranged on the body portion **74** since this has a greater diameter than the tip **76,** and it is therefore preferable to engage the body portion **74** with the outer layer **14** for sealing rather than the tip **76.**

In variant embodiments, which are not illustrated: there are other numbers of injector penetrators, e.g. only 1; the injector penetrators may have other arrangements than circular, e.g. central; the injector penetrators are alternately profiled, e.g. with a non-circular section, including square, and may omit the body portion or the tip, e.g. the end may be flat faced; the inlet may be alternatively arranged, including at the apex, or there may be multiple inlets for improved dispersion.

The extractor penetrators **86** are alternatively arranged on the second part **62** and comprise the equivalent arrangement and functionality as for the injector penetrators **70,** for brevity the same reference numerals are used to designate the same parts, however for the extractor penetrators the **84** inlet is alternatively designated as an outlet **84,** and the extractor penetrators **86** alternatively extend in the longitudinal direction **102.**

In variant embodiments, which are not illustrated: the extractor penetrators are arranged on the first part and the injector penetrators are arranged on the second part or in combinations, e.g. all penetrators are arranged on the same part; other implementations than the extractor penetrators and/or injector penetrators may be used, e.g. a penetrator without an inlet/outlet may create a hole through which the fluid is extracted/injected.

### [Pusher]

Referring to figure 7, the injector penetrators **70** are disposed about a pusher **88,** which is centrally arranged in alignment with central axis **106** on an end wall of the first part **60.** The pusher **88** comprises an extension that extends in the counter longitudinal direction **102.**

The profile of the pusher **88** is selected to correspond to the diameter of the consumable **6,** such that in an undeformed configuration, the consumable **6** abuts the injector penetrators **70** and the pusher **88.** In this way, a position of the consumable **6** can be manipulated by the first part **60** from the consumable receiving position (figure 6) to the consumable washing position (figure 7) without penetration of the consumable **6.** Since the pusher **88** applies a portion of the load to manipulate the position of the consumable **6,** less load is transmitted through the injector penetrators **70** and therefore they are less likely to penetrate the consumable **6.**

Referring to figure 8, in the consumable processing position the pusher **88** acts to limit and precisely control a penetration depth of the injector penetrators **70** so that the previously discussed penetration condition illustrated in figure 11 is achieved. The pusher **88** also acts to apply a portion of the force F to deform the consumable to the deformed configuration and to control its shape in said position.

In variant embodiments, which are not illustrated, the pusher is omitted or is alternatively profiled; the pusher is implemented on the second part.

### [Apertures in Second Part]

Referring to figures 6 and 8, the extractor penetrators **86** are slideably movable in the longitudinal direction **102** through corresponding in shape apertures **94** in the second part **62** to penetrate the consumable **8.** The extractor penetrators **86** are slideable between a retracted position and an extended position.

In the retracted position the extractor penetrators **86** are prevented from penetrating the consumable **6,** since they do not protrude from the apertures **94** of a consumable engaging wall of the second part **62** and to not touch the consumable.

The extractor penetrators **86** are arranged in the retracted position in the: consumable receiving position (figure 6); consumable wash position (figure 7), and; the consumable ejection position (figure 9).

In the extended position the extractor penetrators **86** are enabled to penetrate the consumable **6,** since they protrude from the apertures **94** of the consumable engaging wall of the second part **62** into the processing chamber **64.**

The extractor penetrators **86** are arranged in the extended position in the consumable processing position (figure 8).

The injector penetrators **70** are contrarily fixed with respect of the first part **60** such that they move with the first part **60** (compare the position in figure 8 to figure 9 for example).

Referring to figure 8, in the consumable processing position, the first part **60** and second part **62** apply an opposing compressive force **F** that deforms the consumable **6** to a deformed configuration. The second part **62** is shaped to correspond to the deformed shape of the consumable **6** proximal thereto. The consumable engaging wall is concave to match the concavity in the deformed configuration. Such an arrangement may encourage the deformed configuration and better support/seal the consumable compared to a flat or otherwise shaped wall.

Referring to figure 9, the consumable processing unit **24** is configured to implement the ejection position in which: the extractor penetrators **86** and/or the injector penetrators **70** are retracted within the apertures **94** from the consumable processing position. The apertures therefore push consumable off penetrators.

Referring to figures 8 and 9, when transitioning from the consumable processing position (figure 8) to the consumable ejection position (figure 9) initially the first part **60** is moved in the longitudinal direction **102** to extract the injector penetrators **70** from the consumable **6,** whilst the extractor penetrators **86** remain penetrating the consumable **6** (not illustrated).

To achieve this the extractor penetrators **86** are configured to have a greater total pull-out force than that of injector penetrators **70.** A greater total pull-out force can be achieved by having a greater surface area of the extractor penetrators **86** in contact with the consumable **6** than that for the injector penetrators **86,** in the example the extractor penetrators **86** are thinner and there are more extractor penetrators **86.**

Subsequently, the extractor penetrators **86** are transitioned from the extended position to the retracted position (figure 9), whereby the consumable **6** is drawn against the consumable engaging wall of the second part **62** until the extractor penetrators **86** are fully retracted from the consumable **6.** At which point the consumable **6** is ejected via gravity into the ejection channel **92.**

The extractor penetrators **86** do not required sealing against the apertures **94** since the extractor penetrators **86** seal against the outer layer **14** of the consumable **6.**

In variant embodiments, which are not illustrated: extractor penetrators are fixed with respect to the second part and the injector penetrators are slide through apertures, or both the extractor and injector penetrators are slidable through apertures and may be on the same or separate parts; in the retracted position the tips of the extractor penetrators may touch to support/locate the consumable (but still not penetrate the consumable); the consumable engaging wall of the second part is alternatively profiled, e.g. flat or circular; extractor penetrators have a greater total pull-out force than that of injector penetrators by other means, e.g. they are profiled with bulbus tips, there are the same number of penetrators but they are wider etc; both extractor and injector penetrators are retractable on separate parts or the same part so that the pull-out force does not need to be considered; the penetrators are sealed against the apertures, e.g. by a sealing means that may comprise an O-ring.

### [Deform for sealing]

Referring to figures 8 and 2, in the consumable processing position, with the consumable **6** in the deformed configuration, the consumable **6** is subject to the compressive force **F** in the longitudinal direction **102** to cause a retraction in said direction and a radial expansion in the depth direction **100** and lateral direction **104.** The expansion and contraction one or more of said directions may be 10 - 40% or 20 - 30% compared to the undeformed configuration.

The radial expansion in the deformed configuration causes the consumable **6** to fluidically seal, in a direction transverse to the force **F,** the outer wall **14** of the consumable against the processing chamber **64,** which in the example is a side wall of the first part **60.** Said seal also seals the gap **G** for the wash fluid as will be discussed.

In this way, fluid injected on an inlet side of the consumable 6 that faces the first part **60** can only travel through the interior **16** (and precursor material **18**) of the consumable **6** to fluid extraction at an outlet side of the consumable **6** that alternatively faces the second part **62.** That is, due to the blockage caused by the seal, the fluid can not travel around the outer wall **52** of the outer layer **14** to the outlet side to bypass the precursor material **18.**

In the deformed configuration, the consumable **6** also has increased tension in the outer layer **14** at points where it is penetrated by the extractor penetrator **86** an/or the injector penetrator **70** to facilitate penetration at a lower force and also more precise insertion displacement of the penetrators (e.g. due to the increased tension the outer wall is less likely to displace around the penetrators to resist penetration).

In the consumable processing position, it will be understood that the compressive force **F** presses the first part **60** and second part **62** onto the respective inlet side and outlet side of the consumable **6** to provide a seal such that fluid injected into the consumable travels from the inlet side to the outlet said only through the consumable.

In variant embodiments, which are not illustrated, where the processing chamber includes an interior portion of the machine, the consumable may in the deformed configuration additionally seal against the interior of the machine as well as the side wall of the first part, such an arrangement may be useful in sealing a gap **G** for the wash fluid inlet, as will be discussed.

In variant embodiments, which are not illustrated: the consumable processing unit is alternatively arranged with the first part having a base portion that comprises the injector penetrators and the end wall, which is longitudinally slideable relative a side wall portion of the first part to implement one or more of the positions.

For example, the side wall portion and base portion of the first part both move to the second part to transition from the consumable receiving position to the consumable wash position (in which the side wall portion closes the inlet channel to prevent a consumable being supplied to the constable processing unit), and with the base portion to subsequently move relative the side wall portion and to the second part to transition from the consumable wash position to the consumable processing position to deformed the consumable to the deformed configuration.

In variant embodiments, which are not illustrated, the extractor penetrators may remain stationary, with the second part that comprises the apertures to move relative the machine to implement the retracted position and the extended position. For example, when transitioning from the consumable wash position to the consumable processing position the first part (e.g. the whole fist part or just a movable base portion of the first part) may push the consumable onto the second part, which displaces in the counter longitudinal direction to expose the extractor penetrators to penetrate the consumable. With such an arrangement the second part may be biased (e.g. via a spring) to retain the extractor penetrators in the retracted position.

In variant embodiments, which are not illustrated: the consumable and the consumable processing unit are configured to arrange the consumable in the deformed configuration such that it is sealed at the first side and at the second side (thus obviating a transverse seal in-between). Such a seal may be obtained by the end walls of the first and second part and the compressive force F. With such an arrangement it may not be necessary to expand the consumable so that it seals against the side wall of the first part and/or the interior of the machine.

### [Outlet and Valve]

Referring to figure 8, the consumable processing unit **24** includes a fluid outlet system **110** for outlet of fluid from the consumable **6** in the processing chamber **64.** The fluid outlet system **110** comprises an outlet conduit **112** that fluidically interconnects the outlets **84** of the extractor penetrators **86** and a dispensing outlet (not illustrated) of the machine **2,** from which the beverage and/or food stuff is dispensed into an end user receptacle (not illustrated).

The outlets **84** of the extractor penetrators **86** are fluidical connected to an outlet chamber **116,** which is located behind the second part **62** and lesser longitudinal position than the second part **62.** The fluid conduit **112** is located at a base of the outlet chamber **116** so that the fluid can be fully extracted from the outlet chamber **116** and into the outlet conduit **112.**

Fluid outlet system **110** includes a valve **114,** which is fluidically connected to the outlet conduit **112** of the fluid outlet **110.** The valve **114** implements an open position in which the fluid is transmittable through the outlet conduit **112** and a closed position in which fluid is prevented from being transmitted through the outlet conduit **112.**The valve **114** is biased to the closed position by means of a basing member (not illustrated).

In the example a spring implements the biasing member which acts on a piston (not illustrated). The piston is axially displaceable along a valve axis between the open and closed positions and the spring is axially aligned about said valve axis. The spring and piston are located within the outlet conduit **112,** with the piston in the closed position to seal against a portion of the interior of the outlet conduit **112** and the valve axis aligned to a longitudinal direction of the conduit.

The valve **114** is configured to transition from the closed position to the open position once the fluid at the valve **114** (which is in fluid communication with the fluid in the consumable **6**) has crossed a threshold pressure, e.g. 3-10 bar. In the example the threshold pressure is fixed, e.g. the valve is passively controlled.

In variant embodiments, the threshold pressure is variable and may be adjusted. An increased threshold pressure will result in the beverage and/or foodstuff being brewed at an increased pressure and therefore may be stronger in taste.

In a first example the threshold is manually adjustable (e.g. by changing a tension of the biasing member).

In second example the electrical circuitry **22** adjusts the threshold pressure based on an input from the input unt **40.** The electrical circuitry **22** may automatically adjust the threshold based on a particular beverage being selected for preparation by the user on the input unit **40.** The pump **30** may provide feedback on the fluid pressure to the electrical circuitry **22** which is configured to transition the valve from the closed position to the open position based on the pressure.

Since: the valve **114** is fluidically connected to the outlet conduit **112;** the outlet conduit **112** is fluidically connected to the outlets **84** of the extractor penetrators **86,** and; the outlets **84** are fluidically connected to the interior of the consumable **6,** it will be understood that a pressure determined at the valve **114** is equivalent/representative of a pressure of the fluid inside the consumable **6.**

In variant embodiments, which are not illustrated: different valve configurations are implemented, e.g. a solenoid valve; the valve axis may have different orientations, e.g. perpendicular to the outlet conduit with the spring located outside the outlet conduit; the valve may be omitted, e.g. the penetrators may be selected in size to regulate the desired brewing pressure inside the consumable; the valve may be implemented in any suitable location, including in the processing chamber or in the extractor penetrator(s).

### [Wash position]

Referring to figure 7, the consumable processing unit **24** implements a consumable wash position. The consumable wash position is implemented subsequent to the consumable receiving position (figure 6) and before the consumable processing position (figure 8). In the consumable wash position, the consumable **6** may be washed to achieve one or more of: to remove unwanted contaminants from the consumable **6;** to dissolve the outer layer **14;** to weaken the outer layer **14,** e.g. for more convenient deformation of the consumable and/or penetration.

The consumable **6** is not penetrated in the consumable wash position to avoid contamination of the precursor material **18** with the wash.

The consumable processing unit **12** includes a wash system **120.** The wash system **120** is configured to supply heated and/or pressurised fluid into the processing chamber **64.** In the example, the consumable wash system **120** utilises the fluid conditioning system **26,** hence for brevity it is not described in detail. However, in variant embodiments a dedicated such system with the same components is provided.

The wash system **120** includes a wash inlet **122,** which is arranged to inlet wash fluid onto the consumable **6.**

The wash system **120** includes a wash outlet, which is arranged to extract wash fluid from the processing chamber **64.** In the example the wash inlet and wash outlet are combined. The wash system applies a suction pressure (via the pump) to provide said extraction of the wash fluid. The extracted wash fluid are be collected in a separate wash reservoir (not illustrated).

In variant embodiments, which are not illustrated: a separate outlet is provided at a base of the processing chamber; the wash inlet and/or wash outlet may be implemented as inlet of the injector penetrator and/or the outlet of the extractor penetrator.

The electrical circuity **22** is configured to switch between supplying wash fluid to the wash inlet **122** and of fluid to prepare the beverage and/or foodstuff to the outlet **34,** e.g. by electronic control of an electrical operated valve (not illustrated). The electrical circuitry **22** is also configured to switch between supply of wash fluid to the wash inlet **122** or extracting of the wash fluid from the wash outlet, e.g. by electronic control of an electrical operated valve and the pump.

The wash inlet **122** is arranged at a lesser depth in the depth direction **100** (e.g. above) than the consumable **6** in the consumable washing position such that the wash fluid is directed over the consumable at least partially due to gravity.

The wash inlet **122** projects directly onto a guide member (not illustrated) which is arranged to guide and expand the fluid onto one or more of: the consumable **6;** the injector penetrator **70,** and; the extractor penetrator **86.** The guide member can be implemented as a flat plate that the wash fluid projects onto or an expansion nozzle etc.

In the wash position, the wash fluid is supplied from the wash inlet **122** between a gap **G** between the first part **60** and the second part **62.**

The wash system **120** is configured to supply less fluid than an unoccupied volume of the processing chamber, that is the consumable 6 is not washed by submersion rather by directing the wash fluid over the outer layer **14.** In this way less wash fluid is consumed, which requires storing the wash reservoir.

The wash fluid is transmitted substantially over an entire outer surface of the consumable (but not including any abutments positions that support the consumable).

In variant embodiments: the electrical circuitry **22** implements the wash system **120** to wash the consumable processing chamber **64** after ejection of a processed consumable. The wash fluid may be directed onto the injector penetrator **70,** and/or the extractor penetrator **86.**

In variant embodiments, which are not illustrated: the wash system is omitted.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving radio waves. Therefore, for example, a chip or other device or component for realizing embodiments could generate data for output to another chip, device or component, or have as an input data from another chip, device or component, and such an output or input could be referred to as "transmit" and "receive" including gerund forms, that is, "transmitting" and "receiving", as well as such "transmitting" and "receiving" within an RF context.

As used in this specification, any formulation used of the style "at least one of A, B or C", and the formulation "at least one of A, B and C" use a disjunctive "or" and a disjunctive "and" such that those formulations comprise any and all joint and several permutations of A, B, C, that is, A alone, B alone, C alone, A and B in any order, A and C in any order, B and C in any order and A, B, C in any order. There may be more or less than three features used in such formulations.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

Unless otherwise explicitly stated as incompatible, or the physics or otherwise of the embodiments, example or claims prevent such a combination, the features of the foregoing embodiments and examples, and of the following claims may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of the example(s), embodiment(s), or dependency of the claim(s). Moreover, this also applies to the phrase "in one embodiment", "according to an embodiment" and the like, which are merely a stylistic form of wording and are not to be construed as limiting the following features to a separate embodiment to all other instances of the same or similar wording. This is to say, a reference to 'an', 'one' or 'some' embodiment(s) may be a reference to any one or more, and/or all embodiments, or combination(s) thereof, disclosed. Also, similarly, the reference to "the" embodiment may not be limited to the immediately preceding embodiment.

As used herein, any machine executable instructions, or compute readable media, may carry out a disclosed method, and may therefore be used synonymously with the term method, or each other.

The foregoing description of one or more implementations provides illustration and description, but is not intended to be exhaustive or to limit the scope of the invention to the precise form disclosed. Modifications and variations are possible in light of the above teachings or may be acquired from practice of various implementations of the present disclosure.

### LIST OF REFERENCES

**2** System
**4** Machine
   **20** Processing unit
      **24** Consumable processing unit
         **60** First part (holder)
            **88** Pusher
         **62** Second part (closing)
            **94** Apertures
         **64** Processing chamber
         **68** Actuator
         **70** Injector penetrator, **86** Extractor penetrator
            **72** Body
               **74** Shaft
               **76** Tip
                  **78** Apex
            **80** Fluid line
               **82** Conduit
               **84** Outlet/Inlet
         **110** Fluid outlet
            **112** Outlet conduit
            **114** Valve
      **26** Fluid conditioning system
         **28** Reservoir
         **30** Pump
         **32** Heat exchanger
         **34** Outlet
      **120** Wash system
         **122** Inlet/outlet
      **90** Inlet channel
      **92** Outlet channel
   **22** Electrical circuitry
      **40** Input unit
      **42** Processor
      **44** Feedback system
**6** Consumable
   **14** Outer layer
      **50** Interior wall
      **52** Outer wall
   **16** Interior
      **18** Precursor material
**8** Server system
**10** Peripheral device
**12** Computer network
**100** Longitudinal direction
**102** Lateral direction
**104** Depth direction
**106** Central axis
**108** Major axis (of penetrators)

## Claims

1. A machine for preparing a beverage and/or foodstuff from a consumable comprising precursor material, the machine including:
a processing unit for processing the precursor material, the processing unit including a consumable processing unit and a fluid conditioning system, and;
electrical circuitry to control the processing unit,
the consumable processing unit being movable between a consumable receiving position, in which the consumable is receivable by the consumable processing unit, and a consumable processing position, in which the precursor material of a received consumable is processed,
the consumable processing unit including an outlet system having an outlet conduit fluidical connected to and for outlet of beverage and/or foodstuff fluid from a consumable in the consumable processing position,
wherein the outlet system includes a valve configured to outlet the fluid via the outlet conduit once a threshold pressure of the fluid of the consumable has been crossed.

2. The machine of claim 1, wherein the consumable processing unit comprises a first part arranged as a holder to contain the consumable and a second part arranged to close the holder.

3. The machine of claim 2, wherein the machine comprise an inlet channel that is arranged to transfer the consumable in a depth direction via gravity from an insertion position to a loaded position, in which the consumable is received by the consumable processing unit in the consumable receiving position,
and the first part and second part move in a longitudinal direction between the consumable receiving position and the consumable processing position.

4. The machine of either of claims 2 or 3, wherein the first part and/or second part comprises one or more of:
an injector penetrator comprising an inlet arranged to penetrate the consumable to inject fluid from the fluid conditioning system into the consumable, and/or;
an extractor penetrator comprising an outlet arranged to penetrate the consumable to extract the injected fluid from the consumable.

5. The machine of clam 4, wherein the or each outlet of the extractor penetrator is fluidically connected to the outlet conduit.

6. The machine of any preceding claim, wherein the consumable processing unit is configured to process a consumable which is flexible as defined herein.

7. The machine of any preceding claim, wherein the consumable is spherical, with an outer layer defining an interior, the interior comprising the precursor material.

8. The machine of any preceding claim, wherein the threshold of the valve is adjustable.

9. The machine of claim 8, wherein the threshold of the valve is manually or automatically adjustable.

10. The machine of claim 9, wherein the threshold is automatically adjustable in response to an instruction from a user interface of the machine.

11. The machine of an preceding claim, wherein the valve implements an open position in which the fluid is outlet via the outlet conduit and a closed position in which fluid is prevented from being outlet via the outlet conduit, wherein the valve is biased to the closed position by means of a basing member.

12. The machine of claim 11, wherein the biasing member is a spring and the valve includes a piston, which is axially displaceable along an axis between said positions and the spring is axially aligned about said axis, wherein the spring and piston are arranged in the outlet conduit.

13. A system comprising the machine of any preceding claim and a consumable configured for use with said machine.

14. Use of a consumable for the machine of any of claims 1 to 12.

15. A method of preparing a beverage and/or foodstuff, the method comprising:
processing a precursor material of a consumable with a consumable processing unit to form a beverage and/or foodstuff fluid in the consumable;
increasing a pressure of said fluid in said consumable to a threshold, and;
activating an outlet valve at said threshold to outlet the fluid.
